(19) Europäisches Patentamt
European Patent Office
Office européen des brevets

(11) Veröffentlichungsnummer: **0 039 425**
**B1**

(12) # EUROPÄISCHE PATENTSCHRIFT

(45) Veröffentlichungstag der Patentschrift: **15.02.84**

(21) Anmeldenummer: **81102758.0**

(22) Anmeldetag: **10.04.81**

(51) Int. Cl.³: **C 09 D 5/40**, C 08 F 283/00, C 25 D 13/06

(54) **Wasserverdünnbare Bindemittel, ihre Herstellung und Verwendung.**

(30) Priorität: **15.04.80 DE 3014290**

(43) Veröffentlichungstag der Anmeldung: **11.11.81 Patentblatt 81/45**

(45) Bekanntmachung des Hinweises auf die Patenterteilung: **15.02.84 Patentblatt 84/7**

(84) Benannte Vertragsstaaten: **AT BE CH DE FR GB IT LI NL SE**

(56) Entgegenhaltungen:
**FR - A - 2 311 046**
**FR - A - 2 362 195**
**US - A - 4 036 800**

(73) Patentinhaber: **Lackwerke Wülfing GmbH + Co., Stackenbergstrasse 34, D-5600 Wuppertal 11 (DE)**

(72) Erfinder: **Subramanyam, Arty Ramaiyer T., Quellenstrasse 24, D-5600 Wuppertal 1 (DE)**
Erfinder: **Schröder, Manfred Dr., Im Grund 3, D-5804 Herdecke (DE)**

(74) Vertreter: **Keller, Johanna Carola et al, Deichmannhaus am Hauptbahnhof, D-5000 Köln 1 (DE)**

**EP 0 039 425 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wasserverdünnbare Bindemittel, ihre Herstellung und Verwendung

Die Erfindung betrifft stickstoffbasische Bindemittel, die nach teilweiser Neutralisation mit Säuren wasserverdünnbar, an der Kathode elektrisch abscheidbar und allein oder in Kombination mit Amino- und/oder Phenoplasten thermisch härtbar sind, ein Verfahren zur Herstellung dieser Bindemittel sowie deren Verwendung.

Die elektrophoretische Abscheidung von Kunstharzen und Kunststoffen, auch als Elektrotauchlackierung bezeichnet, ist schon seit langem bekannt. Während noch vor wenigen Jahren fast ausschliesslich die anodische Elektrotauchlackierung (siehe beispielsweise Fritz Beck, Hauptlaboratorium der BASF AG, Ludwigshafen, in «Process in Organic Coatings», 4 (1976), S. 1-60) technisch zum Einsatz kam, hat neuerdings die sogenannte kathodische Elektrotauchlackierung zunehmend an Bedeutung gewonnen. Aus der Literatur sind eine Reihe von Bindemitteln, die hierfür geeignet sind, bekannt (siehe beispielsweise H.U. Schenck, H. Spoor und M. Marx, Kunststofflaboratorium der BASF AG, Ludwigshafen, in «Process in Organic Coatings», 7 (1979), S. 1-77, insbesondere S. 57-66). Diese bekannten Bindemittel weisen mit Hilfe von Säuren neutralisierbare Gruppen auf und sind nach deren partieller bis vollständiger Neutralisation mit Wasser verdünnbar. Aus ihrer wasserverdünnten Form werden sie unter der Einwirkung von Gleichstrom auf kathodisch geschalteten metallischen bzw. elektrisch leitend gemachten Werkstücken als basisch reagierende unlösliche Niederschläge abgeschieden.

Die Vorteile der kathodischen Elektrotauchlackierung, insbesondere im Vergleich zur anodischen Elektrotauchlackierung, sind einerseits im Abscheidungsvorgang selbst, andererseits aber auch von der chemischen Natur der entsprechenden Bindemittel her abzuleiten und zu erklären. So werden beispielsweise die Korrosionsschutzeigenschaften wie auch die Chemikalienbeständigkeit mit kathodischen Elektrotauchbeschichtungen deutlich verbessert. Ebenso wird die bei der anodischen Elektrotauchlackierung gegebene Anlösung des metallischen Werkstückes bei der kathodischen Elektrotauchlackierung unterbunden. Dadurch werden nachteilige Auswirkungen der entsprechenden Metallionen in den Beschichtungen, wie beispielsweise Verfärbung und Fleckenbildung bei weissen und hellfarbigen Abscheidungen sowie Verlaufstörungen und Minderung von Beständigkeitseigenschaften der Beschichtungen vermieden.

Stickstoffbasische Bindemittel, wie sie bisher vorwiegend in kathodisch abscheidbaren Elektrotauchlacken Verwendung finden, sind in der Patentliteratur vielfach beschrieben. Um zu geeigneten stickstoffbasischen Bindemitteln zu gelangen, existieren dementsprechend eine Reihe unterschiedlicher Verfahren. Ausgehend von Verbindungen und/oder Harzen mit Epoxigruppen werden u.a. durch deren Umsetzung mit sekundären Aminen tertiäre Aminogruppen enthaltende Harze bzw. Oligomere erhalten. Deren zahlreiche Modifikationen u.a. mit Borsäureestern oder mit partiell verkappten Isocyanaten sind beispielsweise in den DE-OSen 20 03 123 und 22 52 536 beschrieben.

Eine weitere Variante beschreiben beispielsweise die DE-AS 15 46 840 und die DE-OS 20 02 756, wo die Copolymerisation verschiedener Monomeren zusammen mit tertiäre Stickstoffgruppen aufweisenden Monomeren beschrieben ist, wie beispielsweise mit Acryl- oder Methacrylsäureestern von N-tert.- Aminoalkoholen, Acryl- oder Methacrylsäureamiden primärer, N-tert.- Diamine oder aber mit Glycidyl-(meth)-acrylat, und die anschliessende Umsetzung der Glycidyl-Epoxigruppe im Copolymerisat mit sekundären Aminen.

Ein weiteres Verfahren beschreibt die DE-OS 25 41 801, nämlich die Umsetzung von Mannichbasen kondensierter Phenole mit Epoxidharzen.

Die US-PSen 4 033 917 und 4 036 800 sowie die DE-OS 26 20 612 beschreiben weitere Herstellungsvarianten, wobei ausgehend von Glycidyl-Epoxidharzen durch Addition ungesättigter primärer Amine bzw. ungesättigter Urethan-Monoisocyanate Prepolymere hergestellt werden, deren nachfolgende Copolymerisation mit Monomeren aus der Klasse der Acryl- und Methacrylsäureestern und -säureamide zu den gewünschten Bindemitteln führt. Die zuletzt genannten Monomeren weisen zum Teil tertiäre Aminogruppen auf, deren Neutralisation mit Säuren dem Gesamtcopolymerisat die Wasserverdünnbarkeit verleiht.

Trotz der eingangs erwähnten grundsätzlichen Vorteile der kathodischen Elektrotauchlackierung weisen die zur Zeit bekannten Bindemittel-Lack-Systeme noch wesentliche Mängel auf. Diese Mängel bestehen beispielsweise im wesentlichen in folgendem:

Der zur Erzielung einer ausreichenden Wasserverdünnbarkeit erforderliche Neutralisationsgrad, in den meisten Fällen zwischen 50 und 100%, bezogen auf die tertiäre Aminogruppe des Bindemittels, in den meisten Fällen mit Essigsäure und/oder Milchsäure, ergibt Lacke, deren pH-Werte zum Teil noch unter 6 liegen.

Daraus resultieren instabile Lacke, insbesondere bei Bindemittelkombinationen mit Amino- und/oder Phenoplasten. Ausserdem sind beträchtliche Korrosionsprobleme sowohl in der Lackphase als auch in der darüber befindlichen Dampfphase trotz der vergleichsweise niedrigen Arbeitstemperaturen von etwa 25°C bis 30°C bisher unvermeidlich.

Die bisher bekannten kathodischen Elektrotauchlacke bzw. die hierin verwendeten Bindemittel weisen nach ihrer Abscheidung bei der thermischen Härtung im zur Härtung erforderlichen Temperaturbereich von 180°C bis 200°C sehr hohe Gewichtsverluste auf. Diese Gewichtsverluste machen etwa 20 ± 5 Gew.-%, bezogen auf bei 105°C desolvatisierte und vorgelierte Beschichtungen aus.

Ein weiterer wesentlicher Nachteil der bisher verwendeten kathodisch abscheidbaren Bindemittel-Lack-Systeme, nämlich die mangelnde Steinschlagbeständigkeit im Dreischicht- oder Vierschichtaufbau gegenüber den herkömmlichen anodischen Elektrotauchlacken ist der Automobilindustrie seit langem bekannt. Diese schlechten mechanischen Eigenschaften sind unter anderem im wesentlichen auf die kathodisch abgeschiedenen Lackfilme und deren oben erwähntes Härtungsverhalten zurückzuführen.

Die stickstoffbasischen Bindemittel, wie sie in den US-PSen 4 033 917 und 4 036 800 sowie in der DE-OS 26 20 612 beschrieben sind, weisen deutliche Mängel auf, von denen hier nur einige genannt seien:

Die Wasserlöslichkeit bzw. Wasserdispergierbarkeit kann in allen Fällen nur über stickstoffbasische Acrylmonomere in der abschliessenden Copolymerisationsstufe bei gleichzeitiger Anwesenheit von Mercaptankettenabbrechern erzielt werden. Diese wiederum verursachen unangenehme Geruchsbelästigungen nicht nur beim Lackhersteller, sondern auch beim Endverbraucher. Ausserdem liegen die erforderlichen Neutralisationsgrade mit Carbonsäuren, bezogen auf die Aminzahl der Copolymerisatharze, bei mindestens 60 bis 90%, so dass in den meisten Fällen pH-Werte der wässerigen Dispersionen eindeutig unter 6 resultieren. Die hierdurch bedingten Nachteile, insbesondere bei Kombinationen der Copolymerisatharze mit Amino- oder/und Phenolharzen wurden schon erwähnt und sind hinlänglich bekannt.

Der vorliegenden Erfindung lag die Aufgabe zugrunde, die oben genannten Nachteile der bisher bekannten kathodisch abscheidbaren Bindemittel auszuschalten und stickstoffbasische Bindemittel zur Verfügung zu stellen, deren Wasserverdünnbarkeit bei gleichzeitig deutlich niedrigeren Neutralisationsgraden gegenüber den bekannten Bindemitteln verbessert ist. Ausserdem sollten die aus ihren wässerigen Lacken kathodisch abgeschiedenen und thermisch gehärteten Beschichtungen gegenüber den bekannten in ihren Gesamteigenschaften überlegen sein.

Die Lösung dieser der Erfindung zugrunde liegenden Aufgabe besteht in einem Verfahren zur Herstellung von wasserverdünnbaren, kathodisch abscheidbaren und wärmehärtenden, stickstoffbasischen Bindemitteln mit tertiären Aminogruppen. Dieses Verfahren ist erfindungsgemäss dadurch gekennzeichnet, dass Verbindungen oder Harze mit mindestens einer sekundären Aminogruppe mit mindestens einer Verbindung mit einer Epoxigruppe und einer copolymerisierbaren olefinischen Doppelbindung umgesetzt und anschliessend mit polymerisierbaren Monomeren mit einer äthylenischen Doppelbindung copolymerisiert werden.

Die für die Salzbildung und damit für die Wasserverdünnbarkeit der stickstoffbasischen Bindemittel gemäss der Erfindung notwendigen tertiären Aminogruppen sind in der bevorzugten Ausführungsform des Verfahrens gemäss der Erfindung im Basisharz bzw. in der Basisverbindung vorhanden. Sie können aber auch anteilig über die sich anschliessende Stuffe der Copolymerisation mit tertiäre Aminogruppen aufweisenden Monomeren nachträglich eingebaut werden.

Die für das Verfahren gemäss der Erfindung besonders geeigneten Verbindungen oder Harze werden bevorzugt aus Epoxigruppen enthaltenden Verbindungen oder Harzen durch deren Umsetzung mit primären gesättigten Aminen erhalten.

Erfindungsgemäss können mit besonderem Vorteil als gesättigte primäre Amine solche mit einer tertiären Aminogruppe verwendet und mit den Verbindungen oder Harzen mit Epoxigruppen umgesetzt werden.

Als bevorzugte Verbindung mit einer Epoxigruppe und einer copolymerisierbaren olefinischen Doppelbindung sei hier Allylglycidyläther genannt.

Die Bindemittel gemäss der Erfindung können fremdvernetzend oder auch selbstvernetzend eingestellt werden, je nach Zusammensetzung der in der Copolymerisationsstufe eingesetzten Monomeren.

Die aus den Bindemitteln gemäss der Erfindung formulierten wässrigen Lacke und die hieraus kathodisch abgeschiedenen, thermisch gehärteten Beschichtungen zeichnen sich durch sehr gute mechanische Eigenschaften und darüber hinaus durch ausgezeichnete Chemikalien-, Wasser-, Alkali- und Korrosionsbeständigkeit aus.

Die Überzugsmittel gemäss der Erfindung weisen gegenüber denen des Standes der Technik eine Reihe weiterer Vorteile auf. So können die Bindemittel beispielsweise durch entsprechende Formulierung und Wahl der tertiäre Aminogruppen aufweisenden Komponenten bzw. Ausgangsverbindungen in ihrer Basizität, Molekulargewichtsverteilung, Polarität und in bezug auf die reaktiven Gruppen so eingestellt werden, dass selbst bei nur teilweiser Neutralisation mit Säuren bereits bei pH-Werten im Bereich zwischen 6 und 7,5 eine gute Wasserverdünnbarkeit und eine elektrische Abscheidung auf kathodisch geschaltetem, leitendem Untergrund möglich ist. Dadurch werden sowohl die Probleme der Badstabilität als auch die einer möglichen Korrosion der Abscheidungs- und Einbrennvorrichtungen durch zu hohe Säurekonzentration, beispielsweise durch Essigsäure, vermieden. Darüber hinaus weisen die Bindemittel gemäss der Erfindung aus ihren wässerigen Lacken kathodisch abgeschieden bei der thermischen Härtung ihrer Filme deutlich geringere Gewichtsverluste auf als dies bei vielen zur Zeit bekannten, kathodischen Elektrotauchlacken der Fall ist.

In der bevorzugten Ausführungsform gemäss der Erfindung wird von Verbindungen oder Harzen ausgegangen, die Epoxigruppen aufweisen. In diesem Zusammenhang sind besonders die Glycidyläther von Phenolen, beispielsweise von 4,4'-Bis(hydroxyphenyl)-propan(Bisphenol-A) sowie die Glycidyläther des Bisphenol-F bzw. des Novolak-Typs, sowie Glycidyläther von aliphatischen oder cycloaliphatischen Mono- und Diolen bzw.

Polyolen zu nennen. Darüber hinaus können auch die Glycidylester von aliphatischen, cycloaliphatischen und/oder aromatischen Mono- und Dicarbonsäuren Verwendung finden. Als aliphatische Alkohole und Carbonsäuren sind insbesondere diejenigen mit Kettenlängen von $C_4$ bis $C_{14}$ geeignet.

Im Falle der Epoxidharze auf der Basis von Bisphenol-A, Bisphenol-F bzw. deren Gemischen können bevorzugt solche verwendet werden, die Epoxid-Äquivalente im Bereich von 150 bis 4000, vorzugsweise im Bereich von 200 bis 1000, aufweisen.

Zu den ebenfalls im Rahmen der Erfindung verwendbaren Epoxiverbindungen oder Epoxidharzen gehören ferner Glycidylurethangruppen enthaltende Verbindungen oder Harze, wie sie sich aus entsprechenden Mono- und Polyisocyanaten nieder- oder höhermolekularer Art durch Umsetzung mit Glycidol oder 2-Methylglycidol herleiten lassen. Die Herstellung solcher Glycidylurethane ist seit langem bekannt und beispielsweise in der DE-PS 862 888 näher beschrieben worden. Diese können, je nach Molekülgrösse und Epoxifunktionalität, allein oder aber in Kombination mit anderen Epoxiverbindungen oder Epoxidharzen eingesetzt werden.

Ebenso sind als erfindungsgemäss verwendbare Epoxiverbindungen oder Harze die sogenannten Glycidylcarbonate zu nennen, wie sie beispielsweise in der US-PS 2 795 572 beschrieben worden sind.

Als weitere Modifikationsmöglichkeiten durch Ausgangs-Epoxiverbindungen oder Harze sind im Rahmen der Erfindung Polyglycidyläther heterocyclischer, OH-gruppenhaltiger Verbindungen zu nennen, wie sie sich beispielsweise von der Isocyanursäure ableiten lassen.

Auch können insbesondere solche Epoxiverbindungen und Harze als korrosionsschutzfördernde Modifikationskomponenten Verwendung finden, die sich unter anderem aus Anilin, Alkylanilinen oder 4,4'-Diaminodiphenylmethan durch Umsetzung mit Epichlorhydrin herstellen lassen.

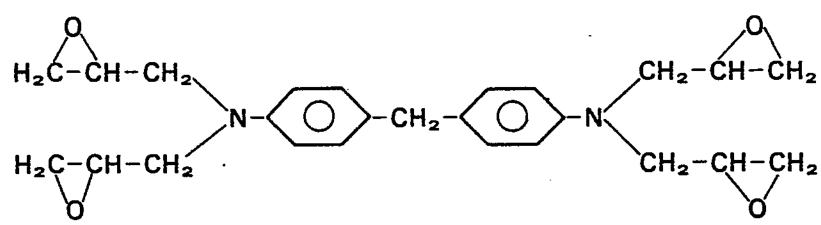

Darüber hinaus können als epoxigruppenhaltige Prepolymere epoxidierte 1,3-Dien-Flüssigpolymerisate (Homo- sowie Copolymerisate) anteilig Verwendung finden. Sie leiten sich vorzugsweise von Butadienpolymerisaten ab, die ein mittleres Molekulargewicht ($\overline{M}\omega$) von 500 bis 4000 haben und einen Mindestanteil an Vinyl (1,2)-Doppelbindungen von 20%, bezogen auf alle vorhandenen Doppelbindungen, aufweisen.

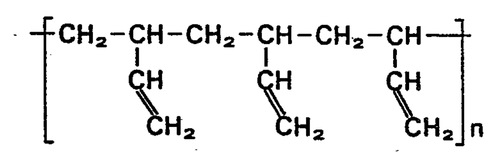

Ausserdem können auch die Epoxidierungsprodukte von Alkenen, Alkadienen, Cycloalkenen, Cycloalkadienen sowie von Vinylcycloalkanen und Vinylcycloalkenen anteilig Verwendung finden.

Um unter Einsatz der aufgeführten Epoxigruppen enthaltenden Verbindungen oder Harze zu den erwähnten, sekundäre Aminogruppen aufweisenden Basisharzen bzw. Basisverbindungen zu gelangen, werden primäre Amine eingesetzt, die aliphatischer, cycloaliphatischer, aromatischer und heterocyclischer Natur sein können. Bevorzugt werden aliphatische Amine bzw. Diamine verwendet, die gleichzeitig eine primäre und eine tertiäre Aminogruppe enthalten. Als Beispiele seien in diesem Zusammenhang genannt:

Dimethylaminopropylamin, Diäthylaminopropylamin, Dimethylaminoäthylamin, Diäthylaminoäthylamin, Diäthylaminobutylamin, Diäthylamin-4-aminopentan sowie N-Methyl-N-(3-aminopropyl)-äthanolamin.

In einer bevorzugten Ausführungsform des Verfahrens wird das geeignete Amin bzw. Amingemisch vorgelegt und auf Temperaturen von mehr als 100°C erwärmt. Durch Zutropfen der Epoxiverbindung bzw. des Epoxidharzes oder der Gemische solcher Verbindungen oder/und Harze und Ausreagieren des Reaktionsgemisches zum Epoxidwert Null kann das entsprechende Basisharz bzw. die Basisverbindung mit mindestens einer sekundären Aminogruppe erhalten werden.

Erfindungsgemäss sollte das Verhältnis der durch das Amin vorgegebenen primären Aminogruppen zu den Epoxidgruppen ≥0,6:1 betragen. Bei Verwendung eines Aminüberschusses über das Verhältnis 1:1 hinaus wird nichtreagiertes, überschüssiges Amin durch anschliessende Vakuumdestillation entfernt.

Das Verfahren gemäss der Erfindung ist nun dadurch gekennzeichnet, dass in der nachfolgenden Reaktionsstufe eine oder mehrere monoolefinische Monoepoxiverbindungen mit den freien reaktiven sekundären Aminogruppen der obengenannten Basisharze bzw. -verbindungen umgesetzt werden.

Als typische Vertreter der monoolefinischen Monoepoxiverbindungen, die erfindungsgemäss zum Einsatz kommen können, seien beispielsweise die erwähnt, die in dem Aufsatz von A.M. Paquin, Epoxiverbindungen und Epoxidharze, Springer Verlag, 1958, S. 342-345 und 352/353 sowie 358/359 genannt sind.

Die Additionsreaktion wird erfindungsgemäss bevorzugt bei höheren Temperaturen durchgeführt, zweckmässig über 100°C, wobei die monoolefinischen Monoepoxiverbindungen dem auf die entsprechende Reaktionstemperatur vorgewärmten Basisprodukt zugetropft werden. Hierbei werden 0,05 bis 1 Mol, insbesondere 0,1 bis 1 Mol der monoolefinischen Monoepoxiverbindung, vorzugsweise 0,2 bis 0,5 Mol je vorhandener sekundärer Aminoäquivalenz verwendet. Im Falle von hochviskosen bzw. festen Ausgangsprodukten werden diese in angelöster, verdünnter Form zugegeben, und als bevorzugte monoolefinische Monoepoxiverbindung wird Allylglycidyläther verwendet. Neben Allylglycidyläther können auch die Glycidyläther von Methallyl-, Äthylallyl- und Chlorallyl-alkohol sowie von Buten-1-ol-3, Penten-1-ol-3, Hexen-1-ol-3, 3-Methyl-buten-1-ol-3, 3-Methyl-penten-1-ol-3 verwendet werden. Ausserdem können die α-, β- bzw. γ-Methylglycidylallyläther sowie gemischte α-Glycidyl-, ω-Allyl-diätherverbindungen Verwendung finden, wie sie beispielsweise durch Umsetzung von niedermolekularen Diglycidylverbindungen oder Oligomeren auf der Basis von A-bzw. F-Bisphenolen mit Allylalkohol in Gegenwart von Bortrifluorid erhalten werden.

Ausser Allylglycidyläther können auch Vinylglycidyläther zum Einsatz kommen. Die Herstellung von Vinylglycidyläthern, beispielsweise durch Umätherung mit Glycidol oder 2-Methylglycidol ist in der US-PS 3 414 334 beschrieben.

Des weiteren seien die Allylester epoxidierter Alkenyl- bzw. Cyclo- oder Dicycloalkenylcarbonsäuren als geeignete Monoepoximonoolefin-Verbindungen genannt.

Ebenso sind erfindungsgemäss als Monoepoximono-olefin-Verbindungen Allylglycidylcarbonate, wie sie beispielsweise in der US-PS 2 798 572 beschrieben sind, geeignet.

Die sich erfindungsgemäss anschliessende Copolymerisation mit äthylenischen, polymerisierbaren Monomeren der allgemeinen Formel

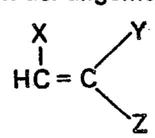

in der X, Y und Z nicht gleichzeitig Wasserstoff bedeuten, wird unter Inertgas in Gegenwart radikalbildender Katalysatoren durchgeführt, und zwar im allgemeinen bei Temperaturen über 100°C. Die hierbei zur Anwendung kommenden Katalysatoren werden üblicherweise bei der Lösungspolymerisation verwendet.

Bei dieser Copolymerisation werden die Monomeren, vorzugsweise im Gemisch mit dem jeweils optimalen Katalysatorsystem, zugetropft; anschliessend lässt man sie bis zur völligen Umsetzung ausreagieren. Es werden vorzugsweise solche Monomere eingesetzt, wie sie nachstehend beispielsweise genannt sind:

1. Als Alkylester der (Meth)acrylsäure (d.h. der Acryl- und/oder Methacrylsäure) eignen sich beispielsweise die $C_1$-$C_8$-Alkylester, wie insbesondere der Äthyl-, n-Propyl-, i-Propyl-, n-Butyl-, i-Butyl-, t-Butyl- und 2-Äthylhexylester der Acrylsäure und der Methylester der Methacrylsäure. Als (Alkyl)vinylbenzole (d.h. Vinylbenzol und/oder wenigstens ein Alkylvinylbenzol) eignen sich insbesondere Styrol, sowie ferner beispielsweise auch α-, o-, m- und p-Alkylstyrole mit $C_1$-$C_3$-Alkylresten.

2. Als andere Comonomere eignen sich insbesondere Mono-hydroxy-$C_2$-$C_6$-alkylester der (Meth)acrylsäure (d.h. der Acryl- und/oder Methacrylsäure), wie der 2-Hydroxy-äthylester, der 2-Hydroxy-propylester und der 4-Hydroxybutylester sowie ferner beispielsweise auch Vinylester von $C_1$-$C_{12}$-Alkancarbonsäuren und das Nitril der (Meth)-acrylsäure (d.h. der Acryl- und/oder Methacrylsäure).

3. Als Aminoalkylester der (Meth)acrylsäure (d.h. der Acryl- und/oder Methacrylsäure) eignen sich beispielsweise die Amino-$C_1$-$C_6$-alkylester, wie der Aminomethyl-, Aminopropyl- und Aminohexylester. Besonders gut geeignet sind die symmetrischen und asymmetrischen Mono-(N,N-di-$C_1$-$C_1$-alkylamino)-$C_1$-$C_6$-alkylester, wie der Mono-(N,N-Dimethylamino)-äthylester, der Mono-(N,N-Dibutylamino)-äthylester und der Mono-(N,N-Dimethylamino)-hexylester.

4. Als Amide, Alkylamide, Oxyalkylamide und Oxaalkylamide der (Meth)acrylsäure (d.h. der Acryl- und/oder Methacrylsäure) eignen sich seitens der Amide Acryl- und Methacrylsäureamid; seitens der Alkylamide beispielsweise $C_1$-$C_1$-Alkylamide, wie das Methyl- und Butylamid; seitens der Oxyalkylamide beispielsweise das Oxymethylamid; seitens der Oxaalkylamide insbesondere die 2-Oxaalkylamide mit insgesamt 2 bis 5 Kohlenstoffatomen im Oxaalkylrest, wie das 2-Oxapropyl- und 2-Oxahexylamid. Besonders gut geeignet sind die 2-Oxaalkylamide.

Ausserdem können Monomere verwendet werden, wie sie in der DE-OS 27 07 482 genannt sind.

Das Verhältnis der einzelnen Monomere zueinander, die Konzentration der Katalysatoren sowie das Gesamtverhältnis des Gemisches von Monomeren zu jeweiligem olefinischen Vorprodukt wird erfindungsgemäss so ausgewählt, dass ein nichtgelierendes, homogen gelöstes Copolymerisat mit einer Aminzahl im Bereich zwischen 40 und 400 entsteht, das nach teilweiser Neutralisation mit Essigsäure wasserverdünnbar ist, wobei der pH-Wert der 10%igen wässrigen Verdünnung im Bereich zwischen 5 bis 8, vorzugsweise im Bereich zwischen 6 und 7, liegt. Wird das olefinische Vorprodukt mit A und das Monomerengemisch mit B bezeichnet, so sollte erfindungsgemäss das Verhältnis der beiden Komponenten zueinander in folgenden prozentualen Gewichtsanteilen gewählt werden, nämlich

A=95 bis 5 Gew.-Teile, vorzugsweise 80 bis 20 Gew.-Teile, und B=5 bis 95 Gew.-Teile, vorzugsweise 20 bis 80 Gew.-Teile.

Die Copolymerisat-Bindemittel gemäss der Erfindung können je nach den verwendeten Ausgangs- und Basisprodukten fremdvernetzend oder selbstvernetzend eingestellt werden. Hierdurch ist

zusätzlich ein breites Spektrum anwendungstechnischer Eigenschaften der elektrisch abgeschiedenen Filme im nichtgehärteten, insbesondere aber im thermisch ausgehärteten Zustand möglich.

In ihrer bevorzugten Einsatzform für kathodisch abscheidbare, wärmehärtende Elektrotauchlacke werden die Copolymerisate in Kombination mit wärmehärtenden Amino- und/oder Phenoplasten verwendet. Hierbei ist es insbesondere von Vorteil, reaktive, an den Methylolgruppen nicht oder nur partiell verätherte Amino- und/oder Phenoplaste zu verwenden. Zum Zwecke einer verbesserten Verträglichkeit zwischen Copolymerisat gemäss der Erfindung und Amino- und/oder Phenoplast wird das Gemisch bei erhöhten Temperaturen von mehr als 60°C präkondensiert. Auf diese Weise wird vor allem die Wasserverdünnbarkeit der Mischungen begünstigt. Ebenso ist auf diese Weise gewährleistet, die entsprechend dem Mischungsverhältnis der Copolymerisate gemäss der Erfindung und der Amino- und/oder Phenoplasteäquivalente Abscheidung auf dem kathodisch geschalteten Werkstück zu erzielen.

Das Mischungsverhältnis von Copolymerisatharzen gemäss der Erfindung und Amino- und/oder Phenoplasten sollte so gewählt werden, dass folgende Gewichtsverhältnisse, bezogen auf Festharzanteile, vorliegen:

Copolymerisat C... 40 bis 95 Gew.-Teile, vorzugsweise bis 65 Gew.-Teile

Phenol/Aminoplaste D... 60 bis 5 Gew.-Teile, vorzugsweise bis 35 Gew.-Teile

Die Einbrenntemperaturen für das thermische Härten der Copolymerisate gemäss der Erfindung, in Kombination mit Amino- und/oder Phenoplasten oder in selbstvernetzender Einstellung in Form ihrer abgeschiedenen und getrockneten Filme betragen 150°C bis 200°C innerhalb 60 bis 10 Minuten.

Die Bindemittel gemäss der Erfindung können mit organischen und/oder anorganischen Säuren in eine wasserverdünnte Form gebracht werden, wobei die Verwendung niedermolekularer organischer Säuren, wie beispielsweise Ameisen-, Essig- und Milchsäure bevorzugt ist.

Die Bindemittel gemäss der Erfindung können für kathodisch abscheidbare Elektrotauchlacke sowohl in unpigmentierter als auch in pigmentierter Form Verwendung finden. Die Konzentration der Copolymerisatharze bzw. der entsprechenden Harzgemische oder Präkondensate in den wässrigen Elektrotauchlacken beträgt vorzugssweise 5 bis 20 Gew.-%. Aus ihren Elerktrotauchlacken werden sie bei Spannungen im Bereich zwischen 50 und 500 Volt, vorzugsweise im Bereich zwischen 100 und 400 Volt, abgeschieden.

Die Erfindung wird durch die nachstehenden Beispiele näher erläutert.

*Beispiel I:* Herstellung eines copolymerisierbaren Adduktharzes mit Allylglycidyläther

In einem mit Rührer, Thermometer, Rückflusskühler und Tropftrichter ausgestatteten Vierhalskolben werden 224 g (2,2 Mol) Dimethylaminopropylamin unter Inertgas (Stickstoff) auf 130°C aufgeheizt. 1400 g einer 75%igen Xylol-Lösung eines Epoxidharzes mit einem Epoxiäquivalentgewicht von 525 (Produkt DER 671 der Dow Chemical) werden innerhalb vom 2 bis 3 Stunden unter Rühren zugetropft. Das Reaktionsgemisch wird solange bei 130°C gehalten, bis ein Epoxidwert von Null erreicht ist. Anschliessend werden überschüssiges Amin und Xylol unter Vakuum abdestilliert, worauf 52 g (0,4 Mol) Allylglycidyläther innerhalb einer halben Stunde bei 140°C zugetropft und das Gemisch eine weitere Stunde bei 150°C unter Rühren umgesetzt wird, worauf das Adduktharz mit Äthylglykol auf einen Festkörpergehalt von 70 Gew.-% eingestellt wird.

*Beispiel II:* Herstellung verschiedener Copolymerisate aus dem Allylglycidyläther-Adduktharz I

*II-1*

572 g des 70%igen Addukt-Harzes I werden im Vierhalskolben unter Inertgas (Stickstoff) auf 130°C erwärmt. Nunmehr wird unter Rühren ein Gemisch aus 80 g Äthylhexylacrylat und 20 g Hydroxypropylmethacrylat sowie 2 g Di-ter.-butyl-peroxid innerhalb von 2 Stunden zugetropft und das Gemisch weitere 3 Stunden unter Rühren bei 130°C gehalten wird.

Es wird ein Copolymerisatharz mit einem Festkörperanteil von ca. 74% erhalten. Die Viskosität einer 50%igen Lösung in Äthylglykol beträgt bei 20°C 1360 $mm^2/s$. Die Aminzahl des Festharzes beträgt 120.

Das Harz ist nach partieller Neutralisation (25% der Aminzahl) mit 10%iger Essigsäure unbegrenzt wasserverdünnbar und weist in 10%iger Lösung einen pH-Wert von 6,5 auf. In einer Zelle für die Elektrotauchlackierung wird auf einem kathodisch geschalteten Stahlblech bei 150 V ein Niederschlag erhalten, der sich jedoch bis 180°C mit unzureichender Lösemittelfestigkeit nur physikalisch thermisch härten lässt.

*II-2*

Es wird entsprechend Beispiel II-1 verfahren, jedoch setzt sich das Monomerengemisch aus 80 g Äthyl-hexylacrylat, 10 g Hydroxypropylmethacrylat und 10 g N,N-Dimethylaminoäthylmethacrylat zusammen.

Das 74%igen Copolymerisatharz besitzt eine Viskosität (50%ig in Äthylglykol) von 1450 $mm^2/s$ auf und hat eine Aminzahl von 135.

Die 10%ige wässrige Lösung des zu 25% der Aminzahl mit Essigsäure neutralisierten Harzes hat einen pH-Wert von 6,7.

Die kathodische Beschichtung auf Stahlblech ist, ebenso wie im Beispiel II-1, thermisch nicht härtbar.

*II-3*

Es wird wie im Beispiel II-1 verfahren, jedoch wird ein Monomerengemisch aus 20 g Styrol und 80 g Äthylhexylacrylat verwendet. Das Copolymerisatharz hat folgende Parameter:

Festkörpergehalt 74%, Viskosität (50%ig) 1550 $mm^2/s$, Aminzahl 122.

Die aus der wässerigen Lösung erhaltene, kathodische Beschichtung ist zwar nach dem Einbrennen im Umluftofen etwas härter als die Beschichtungen der Beispiele II-1 und II-2, lässt sich jedoch noch leicht ablösen.

*II-4*

Es wied wie im Beispiel II-1 verfahren, jedoch werden 676 g des 70%igen Adduktharzes I mit 324 g Äthylglykol weiter verdünnt und mit 600 g Äthylhexylacrylat, 200 g Hydroxypropylmethacrylat und 200 g Styrol copolymerisiert.

Das Copolymerisat hat einen Festkörpergehalt von 75%, eine Viskosität (50%ig in Äthylglykol) von 1240 $mm^2/s$ und eine Aminzahl von 50.

Die 10%ige wässrige Lösung des zu 30% der Aminzahl mit Essigsäure neutralisierten Harzes weist einen pH-Wert von 5,8 auf.

Kathodische Beschichtungen auf Stahlblech sind ebenso wie die Beschichtungen der Beispiele II-1 bis II-3 im eingebrannten Zustand noch etwas weich. Sie lassen sich mit Aceton oder Xylol leicht anlösen.

*II-5*

572 g des 70%igen Addukt-Harzes I werden im Vierhalskolben unter Inertgas (Stickstoff) auf 120°C erwärmt. Unter Rühren werden nun durch zwei getrennte Tropftrichter drei verschiedene Monomere mit geeigneten Perverbindungen zugetropft.

Durch einen Tropftrichter wird ein Gemisch aus 60 g Äthylhexylacrylat mit 1,2 g ter.- Butylperbenzoat, durch den zweiten Tropftrichter ein Gemisch aus 20 g Hydroxypropylmethacrylat, 33 g N-Methylolacrylamid (60% in Wasser) und 0,8 g ter.-Butylperbenzoat während 2 Stunden zugetropft. Anschliessend wird noch 3 weitere Stunden bei 120°C gerührt und das Wasser durch einen Wasserabscheider entfernt.

Das erhaltene Copolymerisat hat einen Festkörperanteil von 74%, eine Viskosität (50%ig in Äthylglykol) von 1050 $mm^2/s$ und eine Aminzahl von 122.

Die 10%ige wässrige Lösung des zu 25% mit Essigsäure neutralisierten Harzes hat einen pH-Wert von 6,2. Aus der Lösung kathodisch auf Stahlblech abgeschiedene Filme sind nach dem Einbrennen im Umluftofen bei 180°C nach 20 Minuten hart und lassen sich schwerer mit organischen Lösungsmitteln anlösen als die Beschichtungen der Beispiele II-1 bis II-4.

*Beispiel III:* Herstellung verschiedener Präkondensate mit Phenol- und Aminharzen

*III-1*

674 g des 74%igen Copolymerisats II-1 werden mit 400 g des wärmereaktiven Phenolharzes Methylon 75108 (Handelsprodukt der General Electric, ein in der phenolischen OH-Gruppe mit Allylalkohol veräthertes Phenolresol) unter Inertgas (Stickstoff) bei 120°C 2 Stunden präkondensiert und mit Äthylglykol auf einen Feststoffgehalt von ca. 75% eingestellt. Die Viskosität der Harzlösung beträgt 1450 $mm^2/s$, die Aminzahl des Festharzes ca. 70.

Das Präkondensat wird mit 10%iger Essigsäure zu 25% seiner Aminzahl neutralisiert und auf 10% Festkörpergehalt mit Wasser verdünnt. Der pH-Wert beträgt 6,3.

Aus der wässrigen Lösung auf kathodisch geschaltetem Stahlblech abgeschiedene Filme härten innerhalb 20 Minuten bei 180°C vollständig aus. Die eingebrannten Beschichtungen sind glatt, hart und werden durch organische Lösemittel nur sehr langsam angegriffen.

*III-2*

674 g des 74%igen Copolymerisats II-3 werden, wie unter III-1 beschrieben, mit dem Phenolresol Methylon 75108 umgesetzt. Die Viskosität der mit Äthylglykol auf 75% Festkörpergehalt eingestellten Harzlösung beträgt 1650 $mm^2/s$, die Aminzahl des Festharzes ca. 74.

Aus der 10%igen wässrigen Lösung des mit Essigsäure neutralisierten Präkondensats (pH-Wert 6,1) werden auf kathodisch geschaltetem Stahlblech Filme abgeschieden, die nach dem Einbrennen bei 180°C nach 20 Minuten ähnliche Filmeigenschaften besitzen wie die unter III-1 beschriebenen Filme.

*III-3*

1000 g des Copolymerisats II-4 werden mit 250 g des 70%igen reaktiven Melaminharzes Maprenal VMF 52/7 der Hoechst AG 2 Stunden bei 120°C präkondensiert. Die resultierende 74%ige Harzlösung hat eine Viskosität von 1050 $mm^2/s$. Das Präkondensat wird, wie unter III-1 und III-2 beschrieben, mit 10 g Essigsäure (10%ig) neutralisiert und mit Wasser auf einen Festkörpergehalt von 10% eingestellt (pH-Wert 5,8).

Die hieraus kathodisch auf Stahlblech abgeschiedenen Filme härten bei Temperaturen von 160°C bis 180°C ausgezeichnet zu harten und sehr lösemittelbeständigen Filmen aus.

*Beispiel IV:* Pigmentierte Lacke

*IV-1.1* Pigmentpaste/schwarz

100 g des 74%igen Copolymerisatharzes II-1, das mit Milchsäure zu 80% der Aminzahl neutralisiert worden ist, wurde mit destilliertem Wasser auf einen Festkörpergehalt von 20% verdünnt. Die Lösung wurde mit 370 g eines schwarzen Pigment-Füllstoffgemisches unter dem Schnellrührer vordispergiert und schliesslich in der Perlmühle dispergiert. Die wässrige Pigmentpaste mit einem Festkörpergehalt von 60% weist einen pH-Wert von 5,6 auf.

*IV-1.2* Schwarzer Elektrotauchlack-Primer

280 g der Pigmentpaste IV-1.1 werden mit 655 g des Präkondensatharzes III-1/75%ig unter einem Schnellrührer 20 Minuten bei ca. 40°C gemischt. Anschliessend wird mit 65 g einer 10%igen wässrigen Essigsäure neutralisiert und mit destilliertem Wasser auf einen Lack-Festkörpergehalt von 16% verdünnt.

Der in einer Elektrotauchlackierungszelle unter intensivem Rühren stabilisierte Lack weist einen pH-Wert von 6,3 auf.

Als Kathode geschaltete, zink-phosphatierte Stahlbleche (Bonder 130 der Metallgesellschaft, Frankfurt) werden bei 25°C unter Gleichspannung von 300 V während 120 Sekunden beschichtet. Die mit destilliertem Wasser gespülten Beschichtungen werden anschliessend im Umluftofen 20 Minuten bei 180°C eingebrannt. Die hierbei erhaltenen, 20 µm starken Beschichtungen sind glatt, gut ausgehärtet und zeigen ausgezeichnete Korrosionsbeständigkeit.

*Vergleichsbeispiel 1*

Die Pigmentpaste IV-1.1 wird mit dem Bindemittel gemäss der DE-OS 25 41 801, Beispiel C 3, entsprechend einem Pigment/Bindemittel-Verhältnis von 0,27: 1 vermischt, mit Essigsäure nur sehr wenig nachneutralisiert und schliesslich auf 16% Lackfestkörpergehalt mit destilliertem Wasser verdünnt (pH-Wert 7,6).

Kathodisch beschichtete zink-phosphatierte Stahlbleche (Bonder 130) werden 20 Minuten im Umluftofen bei 180°C eingebrannt.

Die Primerschichten in einer Stärke von 18 µm werden mit einem hellgrauen, konventionellen Autofüller auf Alkyd-Melaminharz-Basis überspritzt.

Die 17 Minuten bei 165°C im Umluftofen eingebrannten Füller haben eine Trockenfilmstärke von ca. 35 µm.

Von zwei so lackierten Blechen wird ein Blech ausserdem noch mit einem weissen Autodecklack, ebenfalls auf Alkyd-Melaminharz-Basis überspritzt und 17 Minuten bei 130°C eingebrannt. Die Trockenfilmstärke beträgt ca. 35 µm.

Beide Bleche zeigen im Ford-Gravelometer-Test (FLPM-EU-BI 7-1) unbefriedigende Haftung zum Blechuntergrund.

*Beispiel nach der Erfindung*

Zwei nach IV-1.2 mit einem schwarzen Primer gemäss der Erfindung beschichtete zink-phosphatierte Bleche werden wie oben beschrieben in einem Zwei- bzw. Drei-Schicht-Lackaufbau überlackiert.

Beide Bleche zeigen im Ford-Gravelometer-Test ausgezeichnete Haftungseigenschaften des Lackaufbaus zum Blech.

*Vergleichsbeispiel 2*

Ein gemäss Beispiel 5 der DE-OS 22 52 536 hergestelltes Bindemittel-Lacksystem wird auf einen Lack-Festkörpergehalt von 16% mit destilliertem Wasser verdünnt (pH-Wert 6,0).

Die in einer Elektrotauchlackierungszelle kathodisch beschichteten Stahlbleche werden zunächst im Umluftofen 1 Stunde bei 105°C desolvatisiert und gewogen. Die anschliessend 20 Minuten bei 180°C im Umluftofen ausgehärteten Beschichtungen mit einer Filmstärke von ca. 15 µm weisen gegenüber dem desolvatisierten Zustand einen Gewichtsverlust von ca. 18 bis 20% auf.

*Beispiel nach der Erfindung*

Die mit dem schwarzen Elektrotauchlack IV-1.2 beschichteten Stahlbleche werden im Umluftofen 1 Stunde bei 105°C desolvatisiert und gewogen. Anschliessend 20 Minuten bei 180°C im Umluftofen ausgehärtete Beschichtungen mit einer Filmstärke von ca. 18 bis 20 µm weisen gegenüber dem desolvatisierten Zustand lediglich einen Gewichtsverlust von ca. 10 bis 11% auf.

*Beispiel IV-2:* Weisser Ein-Schicht-Elektrotauchlack

*IV-2.1* Weisse Pigmentpaste

100 g des 74%igen Copolymerisatharzes des Beispieles II-4, neutralisiert mit Milchsäure zu 80% der Aminzahl, werden mit destilliertem Wasser auf einen Festkörpergehalt von 20% verdünnt.

Die Lösung wird mit 370 g eines Titandioxidpigmentes vom Rutil-Typ unter dem Schnellrührer gemischt und schliesslich in der Perlmühle dispergiert. Die wässrige Pigmentpaste weist einen Festkörpergehalt von 60% auf bei einem pH-Wert von 5,5.

*IV-2.2* Weisser Elektrotauchlack

72 g der 60%igen Pigmentpaste IV-2.1 werden mit 120 g des 74%igen Präkondensatharzes III-3 unter einem Schnellrührer bei 40°C 20 Minuten gerührt. Anschliessend wird mit 8 g einer 10%igen Essigsäure neutralisiert und anschliessend der Lack auf einen Festkörpergehalt von 15% mit destilliertem Wasser eingestellt. Der pH-Wert dieses Lackes beträgt 6,0.

Auf kathodisch geschalteten Stahlblechen werden bei 240 bis 270 V bei 25°C Lacktemperatur innerhalb von 120 Sekunden Beschichtungen erhalten, die nach dem Einbrennen während 20 Minuten bei 180°C im Umluftofen einwandfreie glänzende weisse Filme einer Trockenfilmstärke von ca. 25 µm ergeben, die hart und gut lösemittelbeständig sind.

Die im Vorstehenden genannten Warenzeichen werden als solche anerkannt.

## Patentansprüche

1. Verfahren zur Herstellung von als fremdvernetzende und/oder selbstvernetzende Komponenten in wässrigen, kathodisch abscheidbaren, wärmehärtenden Lacken geeigneten wasserverdünnbaren, kathodisch abscheidbaren, stickstoffbasischen Bindemitteln mit tertiären Aminogruppen, dadurch gekennzeichnet, dass mindestens eine sekundäre Aminogruzppe enthaltende Verbindungen oder Harze mit einer Verbindung, die eine Epoxigruppe und eine copolymerisierbare olefinische Doppelbindung enthält, umgesetzt und anschliessend mit polymerisierbaren Monomeren mit äthylenischer Doppelbindung copolymerisiert werden.

2. Verfahren nach Anspruch 1, dadurch gekennzeichnet, dass als Verbindungen oder Harze mit sekundären Aminogruppen solche verwendet

werden, die aus Verbindungen oder/und Harzen mit Epoxigruppen durch Umsetzung mit gesättigten primären Aminen erhalten worden sind.

3. Verfahren nach Anspruch 2, dadurch gekennzeichnet, dass als Verbindungen oder Harze mit ein, zwei oder mehr Epoxigruppen Expoxidharze aus der Klasse der phenolischen Verbindungen oder Harze mit Glycidyläthergruppen verwendet werden.

4. Verfahren nach Anspruch 2, dadurch gekennzeichnet, dass die Verbindungen mit ein, zwei oder mehr Epoxigruppen aus der Klasse der Glycidyläther enthaltenden aliphatischen oder cycloaliphatischen Verbindungen ausgewählt sind, die allein oder in Kombination mit den im Anspruch 3 genannten Verbindungen oder/und Harzen mit Epoxigruppen verwendet werden.

5. Verfahren nach Anspruch 2, dadurch gekennzeichnet, dass als Verbindungen oder Harze mit ein, zwei oder mehr Epoxigruppen Glycidylurethane verwendet und diese allein oder in Kombination mit den in den Ansprüchen 3 und 4 genannten Verbindungen oder/und Harzen eingesetzt werden.

6. Verfahren nach Anspruch 2, dadurch gekennzeichnet, dass als Verbindungen oder Harze mit ein, zwei oder mehr Epoxigruppen Glycidylcarbonate verwendet und diese allein oder in Kombination mit den in den Ansprüchen 3 bis 5 genannten Verbindungen oder/und Harzen eingesetzt werden.

7. Verfahren nach den Ansprüchen1 bis 6, dadurch gekennzeichnet, dass als gesättigte primäre Amine solche, die neben der primären eine tertiäre Aminogruppe enthalten, verwendet und mit den Verbindungen oder/und Harzen mit Epoxigruppen umgesetzt werden.

8. Verfahren nach den Ansprüchen 1 bis 7, dadurch gekennzeichnet, dass als Verbindung mit einer Epoxigruppe und einer copolymerisierbaren olefinischen Doppelbindung Allylglycidyläther verwendet wird.

9. Verfahren nach den Ansprüchen 1 bis 8, dadurch gekennzeichnet, dass die polymerisierbaren Monomeren mit einer äthylenischen Doppelbindung die allgemeine Formel

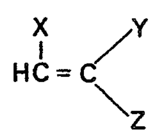

aufweisen mit der Massgabe, dass X, Y und Z nicht gleichzeitig Wasserstoff bedeuten.

10. Bindemittel nach den Ansprüchen 1 bis 9, gekennzeichnet durch Aminzahlen von 40 bis 400 und einer Wasserverdünnbarkeit im pH-Bereich von 5 bis 8 nach teilweiser Neutralisation mit Säuren, hergestellt nach dem Verfahren nach den Ansprüchen 1 bis 9.

11. Verwendung der stickstoffbasischen Bindemittel nach den Ansprüchen 1 bis 10 als fremdvernetzende und/oder selbstvernetzende Komponenten in wässrigen, kathodisch abscheidbaren, wärmehärtenden Lacken.

**Revendications**

1. Procédé pour la préparation de liants contenant des bases azotées avec des groupes amine tertiaire, diluables à l'eau, déposables cathodiquement, réticulables par un agent extérieur et/ou autoréticulables, appropriés comme constituants de laques aqueuses thermodurcissables déposables cathodiquement, caractérisé en ce qu'on fait réagir des composés des résines contenant au moins un groupe amine secondaire, avec un composé qui possède un groupe époxy et une double liaison oléfinique copolymérisable, puis on copolymérise avec des monomères polymérisables possédant une double liaison éthylénique.

2. Procédé selon la revendication 1, caractérisé en ce que, comme composés ou résines possédant des groupes amine secondaire, on utilise ceux qui proviennent de composés ou/et de résines à groupes époxy qu'on a fait réagir avec des amines primaires saturées.

3. Procédé selon la revendication 2, caractérisé en ce que, comme composés ou résines à un, deux ou plusieurs groupes époxy, on utilise des résines époxydes de la classe des composés ou résines phénoliques avec des groupes éther glycidylique.

4. Procédé selon la revendication 2, caractérisé en ce que les composés à un, deux ou plusieurs groupes époxy, sont choisis dans la classe des composés aliphatiques ou cycloaliphatiques contenant des éthers glycidyliques, lesquels composés sont utilisés seuls ou en combinaison avec les composés et/ou résines mentionnés à groupes époxy dans la revendication 3.

5. Procédé selon la revendication 2, caractérisé en ce que, comme composés ou résines à un, deux ou plusieurs groupes époxy, on utilise des glycidyl-uréthannes et ceux-ci sont employés seuls ou en combinaison avec les composés et/ou résines mentionnés dans les revendications 3 et 4.

6. Procédé selon la revendication 2, caractérisé en ce que, comme composés ou résines à un, deux ou plusieurs groupes époxy, on utilise des carbonates de glycidyle et ceux-ci sont employés seuls ou en combinaison avec les composés et/ou résines mentionnés dans les revendications 3 à 5.

7. Procédé selon l'une quelconque des revendications 1 à 6, caractérisé en ce que, comme amines primaires saturées, on utilise celles qui en dehors des groupes amine primaire contiennent un groupe amine tertiaire et on les emploie avec les composés et/ou résines à groupes époxy.

8. Procédé selon l'une quelconque des revendications 1 à 7, caractérisé en ce que, comme composé ayant un groupe époxy et une double liaison oléfinique copolymérisable, on utilise l'éther allylglycidylique.

9. Procédé selon l'une quelconque des revendications 1 à 8, caractérisé en ce que les monomères polymérisables à une double liaison éthylénique ont la formule générale:

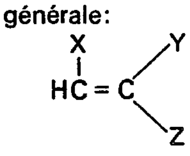

à condition que X, Y et Z ne représentent pas tous à la fois l'hydrogène.

10. Liants selon l'une quelconque des revendications 1 à 9, caractérisés par des indices d'amine de 40 à 400 et par l'aptitude à la dilution par l'eau dans l'intervalle de pH de 5 à 8 après neutralisation partielle avec des acides, préparés par le procédé selon les revendications 1 à 9.

11. Utilisation des liants contenant des bases azotées selon l'une quelconque des revendications 1 à 10 comme constituants réticulables par un agent extérieur et/ou autoréticulables dans des laques aqueuses thermodurcissables déposables cathodiquement.

## Claims

1. A process for producing water-dilutable, cathodically depositable and nitrogen-containing basic binders containing tertiary amino groups, which binders are suitable as externally cross-linking and/or self cross-linking components in aqueous, cathodically depositable thermosetting coating compositions, characterized in that compounds or resins containing at least one secondary amino group are reacted with a compound containing one epoxy group and one copolymerizable olefinic double bond and are subsequently copolymerized with polymerizable monomers having an ethylenic double bond.

2. The process according to claim 1, characterized in that compounds or resins having been obtained by the reaction of compounds and/or resins having epoxy groups with saturated primary amines are used as the compounds or resins having secondary amino groups.

3. The process according to claim 2, characterized in that epoxide resins from the class of the phenolic compounds or resins having glycidyl ether groups are used as the compounds or resins having one, two or more epoxy groups.

4. The process according to claim 2, characterized in that the compounds having one, two or more epoxy groups have been selected from the class of the aliphatic or cycloaliphatic compounds containing glycidyl ether which are used alone or in combination with the compounds and/or resins having epoxy groups and having been mentioned in claim 3.

5. The process according to claim 2, characterized in that glycidyl urethanes are used as the compounds having one, two or more epoxy groups, and these are employed alone or in combination with the compounds and/or resins having been mentioned in claims 3 and 4.

6. The process according to claim 2, characterized in that glycidyl carbonates are used as the compounds having one, two or more epoxy groups, and these are employed alone or in combination with the compounds and/or resins having been mentioned in claims 3 to 5.

7. The process according to claims 1 to 6, characterized in that amines containing a tertiary amino group in addition to the primary amino group are used as the saturated primary amines and reacted with the compounds and/or resins having epoxy groups.

8. The process according to claims 1 to 7, characterized in that allyl glycidyl ether is used as the compound having one epoxy group and one copolymerizable olefinic double bond.

9. The process according to claims 1 to 8, characterized in that the polymerizable monomers having an ethylenic double bond have the general formula

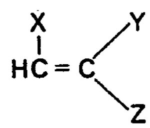

with the proviso that X, Y and Z are not hydrogen each at the same time.

10. A binder according to claims 1 to 9, characterized by amine numbers of 40 to 400 and a water-dilutability in the pH range of from 5 to 8 after partial neutralization with acids, prepared by the process according to claims 1 to 9.

11. Use of nitrogen-containing basic binders according to claims 1 to 10 as externally cross-linking and/or self cross-linking components in aqueous, cathodically depositable, thermosetting coating compositions.